Europäisches Patentamt

European Patent Office

Office européen des brevets

(19)

(11) Publication number : **0 150 934**
**B1**

(12)

# EUROPEAN PATENT SPECIFICATION

(45) Date of publication of patent specification :
16.06.87

(51) Int. Cl.⁴ : **A 23 G   3/30**

(21) Application number : 85300192.3

(22) Date of filing : 11.01.85

(54) A multi-layered chewing gum composition and a process for the production thereof.

(30) Priority : 31.01.84 US 575609

(43) Date of publication of application :
07.08.85 Bulletin 85/32

(45) Publication of the grant of the patent :
16.06.87 Bulletin 87/25

(84) Designated contracting states :
BE CH DE FR GB LI

(56) References cited :
EP-A- 0 058 946
US-A- 1 193 423
US-A- 4 352 823
US-A- 4 352 824
US-A- 4 399 154

(73) Proprietor : **WARNER-LAMBERT COMPANY**
**201 Tabor Road**
**Morris Plains New Jersey 07950 (US)**

(72) Inventor : **Cherukuri, Subraman Rao**
**10 Jean Drive**
**Towaco New Jersey 07082 (US)**
Inventor : **Hriscisce, Frank T.**
**21-71 34th Avenue**
**Astoria New York 11106 (US)**
Inventor : **Bilka, Kenneth P.**
**67 Iris Avenue**
**Floral Park New York 11001 (US)**

(74) Representative : **Jones, Michael Raymond et al**
**HASELTINE LAKE & CO. Hazlitt House 28 Southampton Buildings Chancery Lane**
**London WC2A 1AT (GB)**

## Description

This invention relates to a chewing gum of the two layer laminate type of which one layer has a high initial flavor release layer and the other layer has a longer lasting flavor release.

Chewing gum research has concentrated on the development of products that have a good taste and chew. This has been accomplished by adjusting gum base, flavor, sweetener content and flavor release characteristic. However, there has been difficulty in achieving easy bite, flavor impact, quick flavor release and sustained flavor in a single chewing gum composition.

U.S. Patent No. 4,343,824 discloses a chewing gum composition having long lasting flavor. The desired result is accomplished by incorporating into the chewing gum a non-aqueous solid fatty or gelatinous material, e. g. butter. In order to provide initial flavor a separate pre-sweetened or pre-flavored slab of conventional chewing gum is combined with the slab of gum containing the fatty or gelatinous material.

U.S. Patent No. 4,352,823 discloses a coextruded gum having a soft core portion comprising a polyisobutylene elastomer and at least about 5 % up to about 10 % moisture surrounded by a harder shell of conventional gum composition. This patent relies on the combination of plasticizers (glyceryl triacetate and acetylated monoglyceride) to provide softness to the gum base.

Similarly, U.S. Patent No. 4,352,825 discloses a coextruded gum having a soft center of high water content and containing a combination of at least two recrystallized sweeteners. No specific characteristic other than the physical characteristics of easy bite and easy chew are attributed to the soft gums of the prior art. The purpose is to provide a way for handling soft gum compositions in conventional wrapping machines. The soft gum composition is said to have an easy bite and chew.

It has surprisingly been found that flavor impact, quick flavor release and easy bite as well as sustained flavor release can be achieved in a chewing gum by preparing a first chewing gum composition comprising a low gum base content and a second chewing gum composition having a high base content, and combining the two compositions in a non-homogenous manner, e. g. chewing gum comprising multiple layers. The low base content composition contains liquid flavor and sweetener and, optionally, spray dried flavors. Thus, rather than rely on additional additives such as plasticizers and softeners to impart softness to the chewing gum composition, as was common in the art, the instant invention uses a critical range of gum base in each of the layers comprising the chewing gum composition as a whole.

Different flavor release rates are obtained in the layers by having a first chewing gum composition with a gum base content of about 14 % to 18 % by weight and a second chewing gum composition with a gum base content of at least 22 % by weight, and a differential in gum base content between the first and second composition of about 4 % to about 12 %.

The gum layers are laminated together by a conventional method, e. g. coextrusion, roller pressing, etc.

This invention relates to a chewing gum comprising at least two different chewing gum compositions. In particular it relates to a two-layer chewing gum composition having a first layer exhibiting quick initial release of flavor and flavor impact and a second layer having sustained release of flavor. The quick initial flavor release is accomplished by using a low gum base content in the first layer. The advantages of the instant invention are obtained by using materials common to the art. Except for the differential in gum base content of the different layers, the amounts of various conventional additives and the moisture level of the final chewing gum products are those well known to the art. Optionally, however, the amount of flavor can also be varied from layer to layer in the chewing gum composition.

The method of this invention results in a chewing gum laminate composite which has a differential release rate of flavor in each of the two layers. This differential release rate aspect of the invention may be utilized in the controlled release of other chewing gum adjunctives such as medicaments.

In the practice of this invention, the constituents of each of the chewing gum composition layers are those chewing gum constituents well known in the art.

Chewing gum compositions generally are comprised of a gum base, a sweetener, and a softener. Other agents such as bulking agents, thickeners, fillers and flavoring agents are also commonly used in the art.

As is well known in the art, the gum base comprises natural or synthetic gums or elastomers. The elastomers, of course, are not vulcanized. Illustrative nonlimiting examples of gums and elastomers useful as gum bases are natural rubber, chicle, lechi caspi, jelutone, polyisobutylene, isobutylene-isoprene copolymers and styrene-butadiene copolymers. Mixtures of these gums and elastomers is also contemplated. The gum base generally comprises about 20 % by weight to about 30 % by weight based on the total chewing gum composition. The gum base may contain elastomer solvents to aid in softening the gum or elastomer component. Illustrative, non-limiting examples of such elastomer solvents are the methyl, glycerol or pentaerythritol esters of rosins or modified rosins, such as hydrogenated, dimerized or polymerized rosins or mixtures thereof. Examples of the rosins useful in the preparation of gum bases include the pentaerythritol ester of partially hydrogenated wood rosin, pentaerythritol ester of wood rosin, glycerol ester of partially dimerized rosin, glycerol ester of polymerized wood rosing, glycerol ester of tall oil rosin, glycerol ester of wood rosin and partially hydrogenated wood rosin, as well as partially hydrogenated methyl ester of rosin such as polymers of α-pinene or β-pinene ; terpene resins including polyterpene and mixtures thereof. The elastomer solvent can be employed in an amount ranging from about 10 % to about 75 % by weight of the gum base, preferably about 45 % to about 70 % by weight.

It is generally well known that corn syrup serves several purposes in chewing gum composition. One such purposes is as a source of moisture. Another purpose is as a bulking aid. Still another purpose is as a sweetener. Corn syrup is generally utilized at about 15 % to about 20 % by weight. The specific amount of corn syrup will depend on the overall formulation of the gum composition and should be controlled to provide a moisture content of about 3 % to about 6 % as is customary in the art.

The chewing gum compositions of this invention will generally include a sweetening agent. The sweetening agent may be selected from a wide range of materials including water-soluble agents, water-soluble artificial sweeteners, and dipeptide based sweeteners, including mixtures thereof. Without being limited to particular sweeteners, representative illustrations encompass :

A. Water-soluble sweetening agents such as monosaccharides, disaccharides and polysaccharides such as xylose, ribose, glucose, mannose, galactose, fructose, dextrose, sucrose, sugar, maltose, partially hydrolyzed starch, or corn syrup solids and sugar alcohols such as sorbitol, xylitol, mannitol and mixtures thereof.

B. Water-soluble artificial sweeteners such as the soluble saccharin salts, i. e., sodium or calcium saccharin salts, cyclamate salts, acesulfam-K and the like, and the free acid form of saccharin.

C. Dipeptide based sweeteners such as L-aspartyl-L-phenylalanine methyl ester and materials described in U.S. Patent No. 3,492,131 and the like.

In general, the amount of sweetener will vary with the desired amount of sweeteners selected for a particular chewing gum. This amount will normally be 0.001 % to about 90 % by weight when using an easily extractable sweetener. The water-soluble sweeteners described in category A above, are preferably used in amounts of about 25 % to about 75 % by weight, and most preferably from about 50 % to about 65 % by weight of the final chewing gum composition. In contrast, the artificial sweeteners described in categories B and C are used in amounts of about 0.005 % to about 5.0 % and most preferably about 0.05 % to about 2.5 % by weight of the final chewing gum composition. These amounts are ordinarily necessary to achieve a desired level of sweetness independent from the flavor level achieved from flavor oils While water may be added, independently, with dry sweeteners, it will generally be added as part of a corn syrup or corn syrup mixture.

In order that the chewing gum composition have an acceptable texture it is preferred that a softening agent be included in the composition. Softening agents as used herein refers to emulsifiers, plasticizers, softeners and the like. Illustrative, nonlimiting examples of suitable emulsifiers include lecithin, fatty acid and monoglycerides, di- and triglycerides, propylene glycol monostearate, glycerol monstearate and mixtures thereof. Such materials may be used in amounts of about 1 % to about 25 % by weight.

A variety of different ingredients such as plasticizers or softeners including lecithin, stearic acid, sodium stearate, potassium stearate, glyceryl triacetate, glycerine and the like as well as natural waxes, petroleum waxes, such as polyethylene waxes, paraffin waxes and microcrystalline waxes may also be incorporated into the gum base to obtain a variety of desirable textures and consistency properties. These materials are generally employed in amounts of up to 30 % by weight and preferably in amounts of about 1 % to about 25 % by weight, more preferably about 3 % to about 10 % by weight of the chewing gum composition.

The chewing gum composition of this invention may additionally include the conventional additives of coloring agents such as titanium dioxide ; and fillers such as aluminum hydroxide, alumina, aluminum silicates, talc, dicalcium phosphate, calcium carbonate, and combinations thereof. Preferably the amount of fillers are about up to 25 % by weight of the gum base.

Flavoring agents well known to the chewing gum art may be added to the chewing gum compositions of the instant invention. These flavoring agents may be chosen from synthetic flavor oils and flavoring aromatics, and/or oils, oleo resins and natural extracts derived from plants, leaves, flowers, fruits and so forth, and combinations thereof. These flavoring agents are generally liquids. However, they can also be used as spray dried solids. These spray dried solids can be prepared by dissolving or dispersing the flavoring agent in a water solution of maltodextrin and spray dried. The flavoring agent is adsorbed into the maltodextrin. The use of flavoring agents having other distinct physical forms such as powdered flavorings, beaded flavorings and encapsulated flavorings are within the scope of this invention. Illustrative non-limiting examples of flavoring oils include spearmint oil, cinnamon oil, oil of wintergreen (methylsalicylate) and peppermint oils. Synthetic and natural fruit flavors are also useful as flavoring agents including such flavorings as citrus oil, e. g., lemon, orange, lime and grapefruit ; fruit essences including apple, strawberry, cherry, pineapple and banana ; and various flavorings such as aldehydes and esters including cinnamyl acetate, cinnamaldehyde, citral diethyl acetal, dihydrocavryl acetate, eugenyl formate p-methylamisol, etc. Generally any flavoring or food additives such as those desribed in Chemicals Used In Food Processing, pub 1274 by the National Academy of Sciences, pages 49-53 and 63-258 may be used.

The term « flavoring agent » as used in the specification and claims means any of the natural and synthetic flavorings or combinations thereof used in the chewing gum art and in particular those flavoring agents heretofore described.

The amount of flavoring agent employed is normally a matter of preference and will be determined by such factors as flavor type, gum base type and the strength desired. In general, amounts of about 0.05 % to about 3.0 % by weight of the overall chewing gum composition are used, preferably about 0.3 % to about 1.5 %, more preferably about 0.7 % to about 1.2 % by weight.

As used in the specification and claims, the term « chewing gum composition » is used in its commonly accepted meaning in the art, i. e. a composition comprising a gum base, softeners, bulking agents, emulsifiers, softeners, fillers, flavoring agents and other adjunctives known to the chewing gum art. The chewing gum compositions of the instant invention generally have a moisture content of at least 2 % by weight of the composition to about 8 %, preferably about 3 % to about 6 % by weight.

A previously discussed, the chewing gum products of the instant invention comprise multi-layers of substantially the same or different chewing gum compositions. More particularly, at least two discrete layers are present, although numerous layers are contemplated to accommodate a variety of desired properties such as staggering the release of different flavors, varying the chew properties, etc.

At least two layers of the multi-layered gum composition must have different flavor release rates. One layer must be formulated to provide a rapid initial flavor release, e. g., a burst of flavor ; while another layer is formulated to provide a longer, sustaining flavor release. It is this combination of different flavor release properties due to the critical gum base amounts which gives the layered chewing gum composition and products made therefrom their advantage over prior art chewing gum compositions.

To obtain different flavor release rate, the layers are formulated from different percentages of gum base. This is critical to the invention. Those layers which are to provide rapid initial flavor release have a gum base content of about 14 % to about 18 % and preferably about 15 % to about 17 % by weight of the respective layer of the chewing gum composition.

Those layers which have a sustaining flavor release generally contain gum base in the amount of about 22 % to about 30 % by weight of the respective layer of the gum composition. The differential between the gum base content of one layer and the next layer is at least about 4 % to about 12 % and preferably about 7 % to about 10 % ; and more preferably about 8 %, by weight.

Those layers with less gum base and rapid flavor release would be expected to have softer chew properties and likewise those with a high gum base content and longer flavor release properties would be expected to have a harder chew.

Although two layers having differential flavor release properties is the preferred embodiment of the instant multi-layered chewing gum compositions, a multitude of layers, each having different flavor release capabilities is within the intended scope of this invention. Except for flavor concentration and gum base concentration, the composition of the individual layers may be substantially the same.

In preparing the chewing gum composition of each of the layers, the same processing techniques well known in the art can be used. Generally, the gum base, corn syrup and lecithin are blended together for about two minutes at a temperature of about 82° to about 94 °C. The remaining constituents are then added and heating is continued for about five minutes longer. The chewing gum composition is then formed into sheets or ropes and conditioned for about 24 hours at room temperature. The conditioning of the gum is primarily a partial drying and moisture equilibration step.

The chewing gum composition layers are laminated to one another in any of the techniques known in the art. For example, upon cooling the chewing gum compositions, they can be coextruded by known techniques to form a two-layer laminate. Alternatively, the two layers may be independently formed and then stacked, one upon the other, and passed through nip rolls.

Since the low gum base content layer has a quick flavor release, it will generally contain a lesser amount of flavoring agent than the high base content slower flavor release layer. However, it is within the scope of this invention to have both layers contain the same amount of flavoring or either of them may have more flavoring than the other. Similarly, different compatible flavors may be selected for inclusion in each of the different layers. For example, the first layer may contain banana ; the second layer strawberry. Other flavor combinations include orange/pineapple, lemon/lime, etc.

The advantages of this invention may be more readily appreciated by reference to the following examples.

## Example 1

A two layer gum was prepared using banana as the flavor in the softer low gum base layer and strawberry as the flavor in the harder high gum base layer. The strawberry flavor was utilized at a higher concentration than the banana flavor. The formulation is shown in Table I.

(See table 1 page 5)

Table 1

| | Percent by Weight | |
|---|---|---|
| Component | First Soft Layer | Second Layer |
| Gum Base | 16.0 | 24.0 |
| Corn Syrup | 17.0 | 17.0 |
| Maltodextrin[1] | 0.75 | 0.75 |
| Liquid Flavor | 0.5(banana) | 1.25(strawberry) |
| Powdered Flavor | 0.75(banana) | 0.75(strawberry) |
| Glycerine | 0.4 | 0.4 |
| Lecithin | 0.2 | 0.2 |
| Color | 0.1 (yellow) | 0.1 (red) |
| Sugars | 64.25 | 55.50 |
| | 100.00 | 100.00 |

[1] modified maltodextrin ca. 3-6 lbs./cu.ft. (48-96 kg/m³)
[2] glycerin and lecithin

After conditioning the two layers, they were pressed together and cut into strips. The gum had an initial intense banana flavor followed by a commingling of flavors. After chewing for about 2 to 4 minutes the gum had a distinct, sustained strawberry flavor.

Example II

A two layer orange-pineapple flavored gum was prepared using the compositions shownin Table II.

Table II

| | Percent by Weight | |
|---|---|---|
| Component | First Layer | Second Layer |
| Gum Base | 17.0 | 25.0 |
| Malic Acid | 0.5 | - |
| Corn Syrup | 17.0 | 17.0 |
| Liquid Flavor | 1.0 (orange) | 1.0 (pineapple) |
| Powdered Flavor | 0.5 (orange) | - |
| Citric Acid | 0.25 | - |
| Color | 0.2 (orange) | 0.2 (yellow) |
| Lecithin | 0.2 | 0.2 |
| Glycerin | 0.4 | 0.4 |
| Sugars | 63.0 | 56.05 |
| | 100.00 | 100.00 |

Sheets of each flavor were pressed together to form a two-layer laminated chewing gum. Upon mastication, the chewing gum had an orange flavor followed by an orange/pineapple mixture and subsequently a sustained pineapple taste.

Example III

A lemon-lime two-layer gum was prepared in accordance with the practice of this invention using the formulation set forth in Table III.

(See table 3 page 6)

Table III

| Component | Percent by Weight | |
| --- | --- | --- |
| | First Soft Layer | Second Layer |
| Gum Base | 17.0 | 23.0 |
| Malic Acid | 0.5 | 0.5 |
| Corn Syrup | 17.0 | 17.0 |
| Citric Acid | 0.25 | 0.25 |
| Flavor | 1.0 (lemon) | 1.0 (lime) |
| Lecithin | 0.2 | 0.2 |
| Glycerin | 0.4 | 0.4 |
| Color | 0.1 | 0.1 |
| Sugar | 63.5 | 57.5 |
| | 100.00 | 100.00 |

The two layered gum prepared with these compositions had excellent taste characteristics and exhibited a noticeable flavor release differential upon mastication as described in previous examples.

It is also within the scope of this invention to prepare mixtures of the low gum base content and high gum base content chewing gum compositions of this invention under conditions that do not cause homogenization of the two compositions. This can be accomplished by mixing the two compositions at room temperature. For example, ropes of a low gum base content composition can be braided with ropes of a high gum base content composition and rolled into sheets. In another embodiment two or more compositions of different gum base content are coextruded into sheets in a low shear extruder to avoid homogenization.

While low gum base compositions are known to have easy bite, they are not readily handled on conventional packaging equipment. By using the combination of compositions as herein disclosed the overall chewing gum composition retains the easy bite of the low base composition and is readily handled on conventional packaging equipment.

It is within the scope of this invention to include medicaments in the low base content chewing gum composition of this invention. The medicaments or other active agents included in the composition are quickly and substantially entirely released from the gum composition upon chewing. The term active agent as used in the specification and claims means any drug, medicament or other substance taken for its medicinal or dietary properties.

Illustrative, non-limiting examples of active agents which can be incorporated in the low gum base chewing gum composition of this invention include benzocaine, phenolphthaline, laxatives, lobeline sulfate (no smoking aid), calcium carbonate and magnesium carbonate as antacids, aspirin, fluorides for tooth decay prevention, nicotine as a smoking substitute, vitamins, minerals, caffeine, citrated caffeine, caffeine sodium benzoate, caffeine hydrochloride, appetite suppressants, and the like.

The active agent comprises about 1 to about 10 % by weight of the low base content chewing gum composition, preferably about 1 to about 5 % by weight, more preferably about 2 % to about 4 %, e. g. 3 %. For example, vitamin C is included in the chewing gum composition at about 60 mg per stick, i. e. about 2.7 % by weight. Appetite suppressing gums can include about 5 mg of benzocaine per stick.

Illustrative active agent containing low gum base content chewing gum composition are illustrated in Table IV.

Table IV

| Component | Active Agent Containing Gum | | | |
| --- | --- | --- | --- | --- |
| | Weight Percent | | | |
| | A | B | C | D |
| Gum base | 17.0 | 17.0 | 17.0 | 25.0 |
| Corn Syrup | 17.0 | 17.0 | 17.0 | 17.0 |
| Citric Acid | 0.25 | 0.25 | 0.25 | 0.25 |
| Malic Acid | 0.5 | 0.5 | 0.5 | 0.5 |

Table IV (Continued)

| Active Agent Containing Gum | | | | |
|---|---|---|---|---|
| | Weight Percent | | | |
| Component | A | B | C | D |
| Flavor | 1.5[1] | 2.0[3] | 2.0[5] | 2.0[5] |
| Lecithin | 0.2 | 0.2 | 0.2 | 0.2 |
| Glycerin | 0.4 | 0.4 | 0.4 | 0.4 |
| Color | 0.2[2] | 0.1[4] | 0.1[6] | 0.1[6] |
| Sugar | 60.24 | 62.45 | 62.50 | 54.5 |
| Coated Ascorbic Acid | 1.353 | – | – | – |
| Sodium Ascorbate | 1.333 | – | – | – |
| Chlorophyll | – | 0.05 | – | – |
| Benzocaine | – | – | 0.225 | – |
| | 100.0 | 100.0 | 100.0 | 100.0 |

[1] 1.0 % liquid orange flavor and 0.5 % powdered orange flavor
[2] orange ;
[3] lime ;
[4] grenn ;
[5] lemon ;
[6] yellow.

Sheets of formulations A, B and C were pressed together with the high gum base content formulation D to form a two layer gum.

While this invention has been described in terms of preparing two separate chewing gum compositions, it is within the scope of this invention to prepare a single chewing gum composition having a chewing gum content of at least 22 % by weight, dividing the composition into two ketches and adding a diluent to one ketch to reduce its base content to about 14 % to about 18 % by weight. Suitable diluents include xylitol, mannitol and sorbitol.

**Claims**

1. A multi-layered chewing gum composition comprising at least two coextensive layers, being a first layer and a second layer, each layer having a different composition such that each layer is capable of releasing a flavour at a different rate, wherein the first layer comprises from 14 to 18 % by weight of a gum b ase and a flavouring agent, and wherein the second layer comprises at least 22 % by weight of a gum base and a flavouring agent, with the proviso that the differential, in terms of percentage points by weight, of the gum base between the first and second layers is from 4 % to 12 %, and wherein the moisture content of each of the first and second layers is about the same being in the range from 2 to 8 % by weight, the percentages being based on the weight of the respective layers of the chewing gum composition.

2. A composition according to Claim 1, wherein the weight percent of gum base in the first layer is from 15 % to 17 % and the weight percent of gum base in the second layer is about 24 %, based on the weight of the respective layers of the chewing gum composition.

3. A composition according to Claim 1, wherein the weight percent of the gum base in the second layer is about 25 %, based on the weight of the second layer of the chewing gum composition.

4. A composition according to Claim 1, 2 or 3, wherein the differential, in terms of percentage points by weight, of the gum base between the first and second layers is from 6 % to 10 %.

5. A composition according to any preceding claim, wherein the gum base comprises a natural rubber, a synthetic rubber, or a mixture thereof.

6. A composition according to Claim 5, wherein the rubber is chosen from : chicle, jelutong, baluta, gutta-percha, lechi caspi, sorva, butadiene-styrene copolymers, polyisobutylene, isobutylene-isoprene copolymers and mixtures theereof.

7. A composition according to any preceding claim, wherein each of the at least two layers further comprises a sweetening agent.

8. A composition according to Claim 7, wherein the sweetening agent is chosen from : water-soluble sweetening agents, water-soluble artificial sweeteners, depeptide based sweeteners and mixtures thereof.

9. A composition according to any preceding claim, wherein one or more of the at least two layers further comprises : plasticizers, fillers, rubber softeners, emulsifiers, colouring agents, bulking agents and mixtures thereof.

10. A composition according to any preceding claim, wherein the flavouring agent, which may be the same, or different, for each of the at least two layers is chosen from : spearmint oil, peppermint oil, cinnamon oil, oil of wintergreen (methylsalicylate), lemon oil, orange oil, grape flavour, lime oil, grapefruit oil, banana flavour, apple essence, strawberry essence, cherry essence, pineapple essence, cinnamyl acetate, cinnamaldehyde, citrol diethyl acetal, dihydrocavryl acetate, eugenyl formate, p-methylamisol, and combinations thereof.

11. A composition according to any preceding claim, wherein the flavouring agent is present in each of the at least two layers in an amount of from 0.05 % to 3.0 % by weight of the respective layer or of the chewing gum composition.

12. A composition according to any preceding claim, wherein the flavouring agent is incorporated in each of the at least two layers at a different weight percent.

13. A composition according to any preceding claim, wherein one or more of the at least two layers further comprises a medicament or an active agent, for example, a drug.

14. A process in which a chewing gum composition as claimed in any preceding claim, is prepared, which process comprises :

a) providing a first chewing gum composition having a gum base content of at least 22 % by weight of the first composition ;

b) dividing the first composition into at least a first part and a second part ;

c) adding a diluent to the first part to reduce the gum base content to an amount in the range from 14 % to 18 % by weight to form a diluted first part ; and

d) combining the diluted first part and the second part non-homogeneously to form a two layer chewing gum composition ;

there being a flavouring agent included in each layer, the flavouring agent being released during chewing at a different rate from each layer.

15. A process according to Claim 14, wherein the diluent is xylitol, mannitol or sorbitol.

**Patentansprüche**

1. Mehrschichtige Kaugummizusammensetzung, welche mindestens zwei gleich ausgedehnte Schichten umfasst, womit eine erste Schicht und eine zweite Schicht vorhanden sind, und wobei jede Schicht eine verschiedene Zusammensetzung aufweist, so dass jede Schicht ein Aroma mit einer verschiedenen Intensität abgeben kann, wobei die erste Schicht 14 bis 18 Gew.-% einer Gummibasis und eines Aromaträgers und die zweite Schicht mindestens 22 Gew.-% einer Gummibasis und eines Aromaträgers enthält, mit der Einschränkung dass die Differenz der Gummibasis in Gew.-% ausgedrückt zwischen der ersten und der zweiten Schicht zwischen 4 und 12 % liegt, und wobei der Feuchtigkeitsgehalt jeder der ersten und zweiten Schicht ungefähr derselbe ist und zwischen 2 und 8 Gew.-% liegt, wobei diese Prozente auf das Gewicht der jeweiligen Schicht der Kaugummizusammensetzung bezogen ist.

2. Zusammensetzung gemäss Anspruch 1, in welcher der Anteil der Gummibasis in der ersten Schicht 15 bis 17 Gew.-% und der Anteil der Gummibasis in der zweiten Schicht ca. 24 Gew.-% beträgt, wobei die Gew.-% auf die Gewichte der jeweiligen Schichten bezogen sind.

3. Zusammensetzung gemäss Anspruch 1, in welcher die Gummibasis der zweiten Schicht einen Anteil von ca. 25 Gew.-% der zweiten Schicht bildet.

4. Zusammensetzung gemäss einem der Ansprüche 1 bis 3, in welcher die Differenz der Anteile von Gummibasis in Gew.-% ausgedrückt zwischen 6 und 10 % beträgt.

5. Zusammensetzung gemäss einem der vorangehenden Ansprüche, in welcher die Gummibasis Naturgummi, synthetischen Gummi oder eine Mischung der beiden enthält.

6. Zusammensetzung gemäss Anspruch 5, in welcher der Gummi wahlweise aus folgenden Körpern stammt : Chicle, Jelutong, Baluta, Guttapercha, Lechi-caspi, Sorva, Budadien-styrol-copolymere, Polyisobutylen, Isobutylen-Isopren Copolymere und Mischungen derselben.

7. Zusammensetzung gemäss einem der vorangehenden Ansprüche, in welcher jede der mindestens zwei Schichten auch ein Süssmittel enthält.

8. Zusammensetzung gemäss Anspruch 7, in welcher das Süssmittel wahlweise aus wasserlöslichen Süssmitteln, wasserlöslichen künstlichen Süssmitteln, Süssmitteln auf dipeptider Basis und aus Mischungen derselben besteht.

9. Zusammensetzung gemäss einem der vorangehenden Ansprüche, in welcher mindestens eine Schicht der genannten Schichten Plastizierer, Füllstoffe, Gummiweichmacher, Emulsierer, Färbungsmittel, Schüttmittel und Mischungen derselben enthält.

10. Zusammensetzung gemäss einem der vorangehenden Ansprüche, in welcher das Aromamittel,

welches gleich oder verschieden für jede der mindestens zwei Schichten sein kann, aus Öl von grüner Minze, Öl von Pfefferminze, Zimtöl, Öl von Wintergrün (Methylsalicylat), Zitronenöl, Orangenöl, Traubenaroma, Limonenöl, Grapefruitöl, Bananenaroma, Apfelessenz, Erdbeeressenz, Kirschenessenz, Ananasessenz, Cinnamylacetat, Zimtaldehyd, Citroldiethylacetat, Dihydrocarvylacetat, Eugenyl-ameisensäureester, p-Methylanisol oder aus Mischungen derselben ausgewählt ist.

11. Zusammensetzung gemäss einem der vorstehenden Ansprüche, in welcher das Aromamittel in jeder der mindestens zwei Schichten in einer Menge zwischen 0,05 bis 3 Gew.-% der diesbezüglichen Schicht oder der Kaugummizusammensetzung vorhanden ist.

12. Zusammensetzung gemäss einem der vorstehenden Ansprüche, in welcher das Aromamittel in jeder der mindestens zwei Schichten mit verschiedenen Gewichtsprozenten eingefügt ist.

13. Zusammensetzung gemäss einem der vorangehenden Ansprüche, in welcher mindestens eine der mindestens zwei Schichten auch ein Medikament oder ein aktives Mittel, z. B. ein Arzneimittel enthält.

14. Verfahren zur Herstellung einer Kaugummizusammensetzung gemäss einem der vorangehenden Ansprüche, dadurch gekennzeichnet, dass es folgende Schritte umfasst :

a) Vorbereiten einer ersten Kaugummizusammensetzung mit einem Anteil als Gummibasis von mindestens 24 Gew.-% dieser ersten Zusammensetzung,

b) Aufteilen der ersten Zusammensetzung in mindestens einen ersten und einen zweiten Teil,

c) dem ersten Teil einen Verdünner beigeben, so dass der Anteil der Gummibasis in den Bereich von 14 bis 18 Gew.-% absinkt, um einem verdünnten ersten Teil zu erhalten, und

d) den ersten verdünnten Teil und den zweiten Teil nicht homogen kombinieren, um eine Kaugummizusammensetzung mit zwei Schichten zu bilden, wobei jede Schicht ein Aromamittel enthält, welches während dem Kauen von jeder Schicht in verschiedener Abgabestärke abgegeben wird.

15. Verfahren gemäss Anspruch 14, in welchem der Verdünner Xylitol, Mannit oder Sorbit ist.

## Revendications

1. Composition de chewing-gum à couches multiples faite d'au moins deux couches superposées comprenant une première couche et une seconde couche qui ont chacune une composition différente permettant ainsi de libérer un arôme à une vitesse différente, où la première couche comprend de 14 à 18 % en poids de gomme base ainsi qu'un agent aromatisant, où la seconde couche comprend au moins 22 % en poids de gomme base ainsi qu'un agent aromatisant, où la différence de la teneur en gomme entre la première et la seconde couche est située entre 4 % et 12 % en poids et où la teneur en eau de la première couche et de la seconde couche est environ la même (c'est-à-dire située entre 2 et 8 % en poids), les pourcentages étant exprimés par rapport au poids de la couche concernée dans la composition de chewing-gum.

2. Composition selon la revendication 1, où la proportion de gomme base dans la première couche est située entre 15 % et 17 % en poids et où la proportion de gomme base dans la seconde couche est d'environ 24 % en poids, ces pourcentages étant exprimés par rapport au poids de la couche concernée dans la composition de chewing-gum.

3. Composition selon la composition 1, où la proportion de gomme base dans la seconde couche est d'environ 25 % en poids, le pourcentage étant exprimé par rapport au poids de la seconde couche dans la composition de chewing-gum.

4. Composition selon la revendication 1, 2 ou 3, où la différence de la teneur en gomme base entre la première couche et la seconde couche, est située entre 6 et 10 % en poids.

5. Composition selon l'une quelconque des revendications qui précèdent, où la gomme base comprend une gomme naturelle, une gomme synthétique ou leur mélange.

6. Composition selon la revendication 5, où la gomme est choisie parmi les produits suivants : chicle, jelutong, baluta, gutta-percha, lechi caspi, sorva, copolymères butadiène-styrène, polyisobutylène, copolymère isobutylène-isoprène, ainsi que leurs mélanges.

7. Composition selon l'une quelconque des revendications qui précèdent, où chacune des couches — qui sont deux ou plus — contient en outre un édulcorant.

8. Composition selon la revendication 7, où l'agent édulcorant est choisi parmi les agents édulcorants solubles dans l'eau, les édulcorants artificiels solubles dans l'eau, les édulcorants dipeptidiques, ainsi que leurs mélanges.

9. Composition selon l'une quelconque des revendications qui précèdent, où une ou plusieurs des couches — qui sont deux ou plus — contient/contiennent en outre, des plastifiants, des agents de charge, des agents de ramollissement, des émulsifiants, des colorants, des agents de lest, ainsi que leurs mélanges.

10. Composition selon l'une quelconque des revendications qui précèdent, où l'agent aromatisant qui peut être le même ou différent dans chacune des couches — qui sont deux ou plus — peut être choisi parmi les produits suivants : essence de menthe verte, essence de menthe poivrée, essence de cannelle, essence de wintergreen (méthylsalicylate), essence de citron, essence d'orange, essence de raisin, essence de lime, essence de pamplemousse, essence de banane, essence de pomme, essence de fraise,

essence de cerise, essence d'ananas, acétate de cinnamyle, cinnamaldéhyde, citral, diéthylacétal, acétate de dihydrocavryle, formiate d'eugényle, p-méthylamisol, ainsi que leurs combinaisons.

11. Composition selon l'une quelconque des revendications qui précèdent, où l'agent aromatisant est présent dans chacune des couches — qui sont deux ou plus — en une quantité située entre 0,05 % et 3,0 % en poids de la couche concernée dans la composition de chewing-gum.

12. Composition selon l'une quelconque des revendications qui précèdent, où l'agent aromatisant est incorporé dans chacune des couches — qui sont deux ou plus — dans des proportions exprimées en pourcent poids qui sont différentes.

13. Compositions selon l'une quelconque des revendications qui précèdent, où une ou plusieurs des couches — qui sont deux ou plus — contient en outre un médicament ou un agent actif, comme par exemple un produit pharmaceutique.

14. Procédé de préparation d'une des compositions décrites dans l'une quelconque des revendications précédentes qui comprend de :

a) préparer une première composition de chewing-gum ayant une teneur en gomme base d'au moins 22 % en poids, ce pourcentage étant exprimé par rapport à la première composition ;

b) diviser la première composition en au moins une première partie et une seconde partie ;

c) ajouter un diluant à la première partie pour réduire la teneur en gomme base à une valeur située entre 14 % et 18 % en poids de manière à avoir une première partie diluée ; et de

d) combiner la première partie diluée et la seconde partie sans les homogénéiser pour former une composition de chewing-gum à deux couches ;

où un agent aromatisant est incorporé dans chaque couche pour être libéré pendant la mastication à une vitesse qui est différente pour chaque couche.

15. Procédé selon la revendication 14, où le diluant est le xylitol, le mannitol ou le sorbitol.